# EUROPÄISCHE PATENTSCHRIFT

(11) **EP 2 782 698 B1**
(45) Veröffentlichungstag und Bekanntmachung des Hinweises auf die Patenterteilung: **16.09.2015**
(21) Anmeldenummer: 12816637.8
(22) Anmeldetag: 22.11.2012
(51) Int. Cl.: B23K 1/00, B23K 1/19, B23K 35/32, B23K 35/00, C04B 37/02, H01J 35/10

(54) **VERFAHREN ZUR HERSTELLUNG EINES HOCHTEMPERATURFESTEN VERBUNDKÖRPERS**
PROCESS FOR PRODUCING A HIGH-TEMPERATURE-RESISTANT COMPOSITE BODY
PROCÉDÉ DE FABRICATION D'UN CORPS COMPOSITE RÉSISTANT AUX TEMPÉRATURES ÉLEVÉES

(30) Priorität: 25.11.2011 AT 6402011
(43) Veröffentlichungstag der Anmeldung: 01.10.2014
(73) Patentinhaber: Plansee SE, 6600 Reutte (AT)
(72) Erfinder: MÜLLER, Thomas, A-6604 Höfen (AT); ENNEMOSER, Klaus, A-6610 Wängle (AT); GLATZ, Wolfgang, A-6600 Reutte (AT); MENHARD, Andreas, A-6604 Höfen (AT)
(74) Vertreter: Ciesla, Bettina
(86) Internationale Anmeldenummer: PCT/AT2012/000296
(87) Internationale Veröffentlichungsnummer: WO 2013/075155

(56) Entgegenhaltungen:
- EP-A2- 0 464 916
- AT-U1- 6 994
- JP-A- 2010 140 879
- US-A1- 2002 085 678
- US-A1- 2011 103 553

## Beschreibung

Die vorliegende Erfindung betrifft ein Verfahren zur Herstellung eines hochtemperaturfesten Verbundkörpers sowie einen hochtemperaturfesten Verbundkörper, bei welchem ein erster, nicht-metallischer Abschnitt über eine Lötverbundschicht mit einem zweiten, metallischen Abschnitt aus Mo, einer Mo-basierten Legierung, W oder einer W-basierten Legierung verbunden ist.

Solche hochtemperaturfesten Verbundkörper sind insbesondere im Rahmen der Herstellung von Röntgendrehanoden bereitzustellen. Röntgendrehanoden werden in Röntgenröhren zur Erzeugung von Röntgenstrahlen eingesetzt. Röntgengeräte mit solchen Röntgendrehanoden werden insbesondere im medizinischen Bereich bei der bildgebenden Diagnostik eingesetzt. Im Einsatz werden Elektronen aus einer Kathode der Röntgenröhre emittiert und in Form eines fokussierten Elektronenstrahls auf die, in Rotation versetzte Röntgendrehanode beschleunigt. Ein Großteil der Energie des Elektronenstrahls wird in der Röntgendrehanode in Wärme umgewandelt, während ein kleiner Anteil als Röntgenstrahlung abgestrahlt wird. Durch die Rotation der Röntgendrehanode wird einer lokalen Überhitzung entgegengewirkt.

Aufgrund der hohen Temperaturbelastungen ist das Grundmaterial von Röntgendrehanoden in der Regel aus einem hochschmelzenden Material ausgebildet, das zudem eine gute Wärmeleitfähigkeit zur Abführung der Wärme aufweisen soll. Zudem soll es auch bei hohen Temperaturen und bei hohen Rotationsgeschwindigkeiten eine ausreichende, mechanische Stabilität bereitstellen. Geeignete Materialien für das Grundmaterial sind insbesondere Molybdän sowie Molybdän-basierte Legierungen (z.B. TZM, MHC), wobei auch Wolfram oder Wolfram-basierte Legierungen möglich sind. Als MHC wird in diesem Zusammenhang eine Molybdän-Legierung bezeichnet, die einen Hf-Anteil von 1,0 bis 1,3 Gew.% (Hf: Hafnium), einen C-Anteil von 0,05-0,12 Gew.%, einen O-Anteil von weniger als 0,06 Gew.% und den verbleibenden Anteil (abgesehen von Verunreinigungen) Molybdän aufweist. Um eine effektive Wärmeabstrahlung zu gewährleisten, werden zum Teil rückseitig des Grundkörpers von Röntgendrehanoden Abstrahlkörper aus einem nicht-metallischen Material vorgesehen, die mit dem Grundkörper flächig (in der Regel durch Löten) verbunden sind. Ein geeignetes Material für den Abstrahlkörper ist insbesondere Graphit, das sich durch seine Abstrahlcharakteristik, Temperaturbeständigkeit und durch sein geringes Gewicht auszeichnet. Gerade dann, wenn die Röntgendrehanoden für hohe Strahlungsleistungen ausgelegt sein sollen, werden aufgrund der hohen Temperaturen, der hohen Temperaturgradienten und der hohen, mechanischen Belastungen (aufgrund der hohen Rotationsgeschwindigkeiten) besonders hohe Anforderungen an die Festigkeit des Grundkörpers der Röntgendrehanoden und an die Stabilität und die Langlebigkeit der Verbindung desselben mit dem Abstrahlkörper gestellt.

Wie in dem Fachgebiet bekannt ist, kann durch Umformen (z.B. Schmieden) eine besonders hohe Festigkeit von Mo, Mo-basierten Legierungen (z.B. TZM, MHC), W und W-basierten Legierungen erzielt werden. Werden diese nach dem Umformschritt über deren Rekristallisationstemperatur erhitzt, so wird deren Festigkeit reduziert (thermische Alterung). Dementsprechend ist bei der Herstellung von Röntgendrehanoden darauf zu achten, dass nach dem Umformschritt keine übermäßige Erwärmung erfolgt, um eine thermische Alterung des Grundkörpers zu minimieren. Auf der anderen Seite müssen für die Lötverbindung zwischen Grundkörper und Abstrahlkörper solche Lote eingesetzt werden, die auch bei den hohen Einsatztemperaturen eine ausreichende Stabilität gewährleisten. Zusätzlich wird an die Lötverbindung die Anforderung gestellt, dass diese auftretenden, mechanischen Spannungen zwischen den beiden Verbindungspartnern standhält. Solche mechanischen Spannungen, die insbesondere in der Ebene der Lötverbindung wirkende Kraftkomponenten aufweisen, entstehen insbesondere durch unterschiedliche Wärmeausdehnungskoeffizienten der beiden Verbindungspartner, durch die hohen, auftretenden Temperaturgradienten und/oder durch die, aufgrund der Rotation wirkenden Kräfte.

Im Bereich der Röntgendrehanoden werden und wurden auch abweichende Konzepte entwickelt, bei welchen eine vergleichbare Problemstellung im Hinblick auf eine erforderliche, flächige Verbindung zwischen einem nichtmetallischen Abschnitt und einem metallischen Abschnitt aus Mo, einer Mo-basierten Legierung, W oder einer W-basierten Legierung besteht. Ferner treten vergleichbare Problemstellungen bei solch einer flächigen Verbindung auch bei Röntgenanoden allgemein (z.B. Stehanoden) sowie zum Teil bei hochtemperaturfesten Verbundkörpern aus den genannten Materialien allgemein auf.

In der US 2002/0085678 A1 ist ein Verfahren zum Verbinden eines Molybdänlegierungssubstrates mit einer Graphitscheibe zu einer Röntgendrehanode beschrieben, bei welchem in einem ersten Schritt ein Molybdänlegierungsblatt mit der Graphitscheibe mit einem Reinmetalllot verlötet wird und in einem zweiten Schritt die plattierte Graphitunteranordnung mit dem Molybdänlegierungssubstrat unter Verwendung einer speziellen Lotlegierung verlötet wird. Als geeignete Lotlegierung sind insbesondere eine Ti-Cr-Be-Legierung (Titan-Chrom-Beryllium-Legierung) sowie eine Ti-Si-Legierung (Titan-Silicium-Legierung) beschrieben.

In der US 2011/0103553 A1 ist ein Verfahren zur Herstellung einer Röntgenanode beschrieben, bei welchem ausgehend von einem Grundmaterial aus Molybdän oder einer Molybdänlegierung zu einem Kohlenstoff-Grundmaterial hin eine erste Lötschicht aufweisend eine Nb-Ti-Legierung, eine zweite Lötschicht aufweisend Nb oder eine Nb-Legierung und eine dritte Lötschicht aufweisend Zr angeordnet werden und diese Anordnung in einem Schritt bei einer Temperatur im Bereich von 1.730 °C bis 1.900 °C gelötet wird. In der JP 2010-140879 A ist ein Verfahren zur Herstellung einer Röntgenanode beschrieben, bei welchem ausgehend von einem Grundmaterial aus Molybdän oder einer Molybdänlegierung zu einem Graphit-Grundmaterial hin eine erste Lötschicht aus einer Ta-Ti-Legierung, eine zweite Lötschicht aus Ta oder einer Ta-Legierung und eine dritte Lötschicht aus Zr angeordnet werden und diese Anordnung in einem Schritt bei einer Temperatur im Bereich von 1.750°C bis 1.900 °C gelötet werden. Sowohl bei der US 2011/0103553 A1 als auch bei der JP 2010-140879 A wird jeweils die zweite Lötschicht vorgesehen, um eine Diffusion von Zr und Mo zu vermeiden. In der ersten Lötschicht wird das Material der zweiten Lötschicht (Nb bzw. Ta) zu Ti zulegiert, um den Schmelzpunkt der ersten Lötschicht zwischen dem vergleichsweise hohen Schmelzpunkt der zweiten Lötschicht und dem vergleichsweise niedrigen Schmelzpunkt von reinem Ti einzustellen.

Dementsprechend besteht die Aufgabe der vorliegenden Erfindung darin, einen hochtemperaturfesten Verbundkörper und ein Verfahren zur Herstellung eines solchen hochtemperaturfesten Verbundkörpers bereitzustellen, bei welchem ein erster, nicht-metallischer Abschnitt über eine Lötverbindung mit einem zweiten, metallischen Abschnitt aus Mo, einer Mo-basierten Legierung, W oder einer W-basierten Legierung verbunden ist, wobei einerseits eine thermische Alterung des metallischen Abschnitts weitgehend verhindert wird und andererseits die Lötverbindung hohen Temperaturen, hohen Temperaturgradienten und hohen, mechanischen Spannungen zwischen den beiden Abschnitten standhält.

Die Aufgabe wird gelöst durch ein Verfahren gemäß Anspruch 1 sowie durch einen hochtemperaturfesten Verbundkörper gemäß Anspruch 13. Vorteilhafte Weiterbildungen der Erfindung sind in den abhängigen Ansprüchen angegeben.

Gemäß der vorliegenden Erfindung wird ein Verfahren zur Herstellung eines hochtemperaturfesten Verbundkörpers durch flächiges Verbinden eines ersten, nicht-metallischen Abschnittes über eine Lötverbundschicht mit einem zweiten, metallischen Abschnitt aus Mo (Mo: Molybdän), einer Mo-basierten Legierung, W (W: Wolfram) oder einer W-basierten Legierung, bereitgestellt. Das Verfahren weist dabei nachfolgende Schritte auf:
A) Herstellen einer ersten Anordnung aus dem ersten Abschnitt, einem ersten Zr-Lot (Zr: Zirconium) und einer Zwischenschicht in dieser Abfolge, wobei die Zwischenschicht zu mindestens 90 at.% aus mindestens einem der Elemente Ta (Ta: Tantal), Nb (Nb: Niobium) und/oder W gebildet ist,
B) Erwärmen der ersten Anordnung in einem ersten Lötschritt derart, dass das Zr-Lot, nicht aber die Zwischenschicht schmilzt und ein Teil-Verbundkörper erhalten wird,
C) Herstellen einer zweiten Anordnung aus dem Teil-Verbundkörper, einem, an die Zwischenschicht angrenzenden zweiten Lot und dem zweiten Abschnitt in dieser Abfolge,
   wobei das zweite Lot durch genau ein Material der Gruppe Ti, Ti-basierte Lotkombination, V-basierte Lotkombination, Zr oder Zr-basierte Lotkombination gebildet wird und derart gewählt ist, dass dieses in der zweiten Anordnung bei einer niedrigeren Temperatur als das erste Zr-Lot schmilzt, und
D) Erwärmen der zweiten Anordnung in einem zweiten Lötschritt derart, dass das zweite Lot, nicht aber die aus dem ersten Zr-Lot erhaltene Lötverbindung schmilzt.

Die vorliegende Erfindung betrifft ferner einen hochtemperaturfesten Verbundkörper, der durch das erfindungsgemäße Verfahren hergestellt ist. Bei dem erfindungsgemäßen Verfahren können ferner auch eine oder mehrere der nachfolgend diskutierten Varianten und Weiterbildungen realisiert werden.

Durch die Verwendung des ersten Zr-Lotes wird ein guter Halt an dem ersten, nicht-metallischen Abschnitt, der insbesondere aus einem Kohlenstoff-basierten Material (z.B. Graphit) gebildet ist, erzielt. Die Zwischenschicht aus den genannten Materialien Ta, Nb und/oder W, die einen hohen Schmelzpunkt aufweist und dementsprechend bei beiden Lötschritten nicht schmilzt, verhindert effektiv eine Diffusion von Elementen über die Zwischenschicht hinweg. Insbesondere wird, falls der erste Abschnitt aus einem Kohlenstoff-basierten Material gebildet ist, eine Diffusion von Kohlenstoff in den zweiten, metallischen Abschnitt (z.B. aus Mo oder einer Mo-Legierung) verhindert. Ferner wird durch die Zwischenschicht verhindert, dass - sofern der zweite, metallische Abschnitt aus Mo oder einer Mo-basierten Legierung gebildet ist - aufgrund von Diffusion eine Vermischung von Zr aus dem ersten Zr-Lot und von Mo aus dem zweiten Abschnitt erfolgt und ein Eutektikum gebildet wird. Die Bildung solch eines Eutektikums mit vergleichsweise niedrigem Schmelzpunkt ist insbesondere bei Verbundkörpern, die für hohe Einsatztemperaturen ausgelegt sind, unerwünscht.

Indem für das zweite Lot ein Material gewählt wird, das in der zweiten Anordnung bei einer niedrigeren Temperatur als das erste Lot schmilzt, kann der zweite Lötschritt bei einer niedrigeren Temperatur als der erste Lötschritt durchgeführt werden. Die beanspruchten Lotmaterialien für das zweite Lot weisen (alleine oder in Kombination mit dem daran angrenzenden, zweiten Abschnitt) eine niedrige Schmelztemperatur auf und eignen sich besonders gut für die Herstellung einer belastbaren Verbindung der Zwischenschicht mit dem zweiten, metallischen Abschnitt. Da der zweite, metallische Abschnitt nur bei Durchführung des zweiten Lötschrittes (auf eine vergleichsweise niedrige Temperatur) erwärmt wird, wird eine thermische Alterung des zweiten Abschnittes weitgehend vermieden. Dies ist insbesondere dann vorteilhaft, wenn der zweite Abschnitt und/oder ein fest damit verbundener Abschnitt aus einem umgeformten Material besteht/bestehen.

Weiterhin ist bei dem erfindungsgemäßen Verfahren vorteilhaft, dass durch die dreilagige (oder gegebenenfalls auch mehrlagige) Lötverbundschicht eine Verbindung hergestellt wird, durch die zwischen dem ersten und dem zweiten Abschnitt auftretende Spannungen effektiv ausgeglichen werden. Dieser ausgleichende Effekt wird besonders dann erreicht, wenn als Material für die Zwischenschicht Ta und/oder Nb eingesetzt werden. Dabei ist insbesondere bevorzugt, dass die Zwischenschicht zu mindestens 90 at.% aus Ta und/oder Nb, insbesondere zu mindestens 90 at.% aus Ta allein oder zu mindestens 90 at.% aus Nb allein gebildet ist. Denn bei diesen Materialien weist die Zwischenschicht bei den Einsatztemperaturen elastische und zum Teil plastische Eigenschaften auf und gleicht so effektiv zwischen den beiden Abschnitten auftretende Spannungen sowie sich zum Teil in den angrenzenden Lötschichten ausbildende Risse aus. Vorzugsweise ist die Zwischenschicht zu mindestens 99 at.% aus Ta und/oder Nb, insbesondere zu mindestens 99 at.% aus genau einem Element, d.h. aus Ta allein oder aus Nb allein, ausgebildet. Nb ist im Hinblick darauf, dass es preiswerter und leichter ist, vorteilhaft. Die elastisch plastischen Eigenschaften sind besonders ausgeprägt, wenn die Zwischenschicht im Wesentlichen nur aus einem Element und mit möglichst hoher Reinheit ausgebildet ist. Umgekehrt kann durch Zulegieren von weiteren Elementen (beispielsweise bis zu 10 at.%, insbesondere bis zu 5 at.%) gezielt eine höhere Festigkeit der Zwischenschicht eingestellt werden. Wird eine Zwischenschicht aus W (d.h. zu mindestens 90 at.%, insbesondere zu mindestens 99 at.%) eingesetzt, so bildet diese eine effektive Diffusionssperrre und zeichnet sich durch eine hohe Festigkeit aus, die auch bei hohen Einsatztemperaturen in hohem Maße erhalten bleibt.

Wie eingangs erläutert wird, ist das erfindungsgemäße Verfahren im Rahmen der Herstellung einer Röntgendrehanode zum Verbinden eines metallischen Grundkörpers aus Mo, einer Mo-basierten Legierung (insbesondere TZM oder MHC), W oder einer W-basierten Legierung mit einem nicht-metallischen Abstrahlkörper, der insbesondere aus Graphit ausgebildet ist, besonders gut geeignet. Insbesondere ist es zur Verbindung eines Grundkörpers aus TZM (oder gegebenenfalls einer anderweitigen, Mo-basierten Legierung, wie beispielsweise MHC) mit einem Abstrahlkörper aus Graphit geeignet. In der Vergangenheit und in der zukünftigen Entwicklung sind im Bereich von Röntgendrehanoden aber auch anderweitige Materialkombinationen für den ersten und den zweiten Abschnitt möglich. Diese ergeben sich insbesondere dadurch, dass für den Grundkörper und/oder für den Abstrahlkörper anderweitige Materialien eingesetzt werden (z.B. reines Mo, W oder W-basierte Legierung für den Grundkörper; Kohlenstoff-faserverstärkter Kohlenstoff oder Kohlenstoff-faserverstärktes Siliziumcarbid für den Abstrahlkörper), dass andere Bauteile einer Röntgendrehanode durch das erfindungsgemäße Verfahren verbunden werden (z.B. im Bereich des Stils einer Röntgendrehanode) oder dass anderweitige Konzepte zur Realisierung der Röntgendrehanode entwickelt werden. Bei den anderweitigen Konzepten sind beispielsweise Entwicklungen dahingehend zu berücksichtigen, dass (im Hinblick auf eine Gewichtsoptimierung) der Grundkörper der Röntgendrehanode aus einem C-basierten Material (z.B. aus einem Kohlenstoff-faserverstärkten Kohlenstoff) oder aus einer Keramik (z.B. Siliziumcarbid (SiC), Siliziumnitrid (Si₃N₄), Aluminiumnitrid (AIN), Borcarbid (B₄C), Kohlenstofffaserverstärktes Siliziumcarbid (C-SiC) oder Siliziumcarbid-faserverstärktes Siliziumcarbid (SiC-SiC)) ausgebildet werden kann, und auf diesen direkt eine Brennbahn (aus z.B. W oder einer W-basierten Legierung, wie beispielsweise eine Wolfram-Rhenium-Legierung) gelötet wird, wobei für diese Verbindung ebenfalls das erfindungsgemäße Lötverfahren anwendbar ist. Alternativ kann auf solch einen nicht-metallischen Grundkörper auch zunächst ein metallischer Verbindungsabschnitt (aus z.B. Mo oder einer Mo-basierten Legierung, wie beispielsweise TZM oder MHC) mit dem erfindungsgemäßen Verfahren aufgelötet werden, um auf den Verbindungsabschnitt dann die Brennbahn (aus z.B. W oder einer W-basierten Legierung) aufzubringen. Ferner kann das erfindungsgemäße Verfahren auch angewendet werden, um solch einen nicht-metallischen Grundkörper mit weiteren, metallischen Verbindungspartnern, beispielsweise im Bereich des Stils, zu verbinden.

Ferner ist das erfindungsgemäße Verfahren auch allgemein bei Röntgenanoden (z.B. Stehanoden) anwendbar, bei denen - je nach Ausführung - ebenfalls eine hochtemperaturfeste Verbindung von zwei Abschnitten aus den entsprechenden Materialien erforderlich sein kann. Weiterhin ergeben sich auch über den Bereich von Röntgendrehanoden hinaus Anwendungen, in denen zwei Abschnitte aus den jeweils beanspruchten Materialien durch eine hochtemperaturfeste Verbindung miteinander zu verbinden sind und dementsprechend das erfindungsgemäße Verfahren anwendbar ist.

Unter einer Mo-basierten bzw. W-basierten Legierung wird auf eine Legierung Bezug genommen, die zu mindestens 50 at.% Mo bzw. W, insbesondere zu mindestens 90 at.% Mo bzw. W aufweist. Insbesondere ist der zweite, metallische Abschnitt aus einer Mo-Legierung gebildet, wobei TZM eine, im Bereich von Röntgendrehanoden besonders bewährte Mo-Legierung ist. Ferner wird auch MHC häufig eingesetzt. Ein "flächiges Verbinden" ist unabhängig davon gegeben, ob die zu verbindenden Flächen eben oder gekrümmt sind. Mit einem "hochtemperaturfesten Verbundkörper" wird auf einen Verbundkörper Bezug genommen, bei welchem die Lötverbindung insbesondere (lokal an der Lötverbindung herrschenden) Temperaturen im Bereich von 1.000 - 1.600 °C standhält, wobei der erste und/oder der zweite Abschnitt im Einsatz auch höhere Temperaturen aufweisen können (z.B. bei Röntgendrehanoden sind im Bereich der Brennbahn bis zu 2.500 °C üblich).

Mit einem Zr-Lot (sowohl bei dem ersten als auch bei dem zweiten Lot) wird auf ein Lot Bezug genommen, das im Wesentlichen, insbesondere zu mindestens 90 at.%, aus reinem Zr besteht. Dabei ist zu berücksichtigen, dass üblicherweise eingesetzte Zr-Lote allgemein einen relativ hohen Anteil an Verunreinigungen bzw. Zusätzen aufweisen (z.B. Hf; Hf: Hafnium), die typischerweise im Bereich von bis zu 5 at.% liegen. Üblich ist beispielsweise ein Hf-Anteil von 2,35 at.%. Mit "Lotkombination" wird sowohl auf die Variante Bezug genommen, dass die betreffenden Elemente bereits als Legierung oder als fein vermischte Paste (Metallpulver mit flüssiger Binderphase) vorliegen, als auch auf die Variante, dass die Lotkombination durch zwei oder mehrere Folien oder Einzelschichten unterschiedlicher Zusammensetzung, insbesondere durch Folien oder Einzelschichten aus den jeweiligen Einzelelementen, gebildet wird. Ferner kann das (erste wie auch das zweite) Lot - wie in dem Fachgebiet bekannt ist - unter anderem als Folie, als metallische Schicht (aufgebracht durch ein Beschichtungsverfahren, z.B. CVD, Plasmaspritzen, etc.) oder als Paste aufgebracht werden. In Bezug auf das zweite Lot wird mit einer Ti-, V-, oder Zr-basierten Lotkombination auf ein Lot Bezug genommen, welches das betreffende Element Ti, V bzw. Zr zu mindestens 50 at.% aufweist. Vorzugsweise wird das zweite Lot aus genau einem oder maximal zwei Elementen gebildet (abgesehen von Verunreinigungen oder Zusätzen, die einen maximalen Anteil von 5 at.% bilden können). Mit einem Ti-Lot wird auf ein Lot Bezug genommen, das im Wesentlichen, insbesondere zu mindestens 95 at.%, aus reinem Ti besteht. Wird für das zweite Lot eine V-basierte oder eine Zr-basierte Lotkombination eingesetzt, so ist der zweite (und vorzugsweise einzige weitere) Bestandteil der Lotkombination vorzugsweise Ti. Dadurch wird ein relativ niedriger Schmelzpunkt der zweiten Lotkombination erreicht. Für das zweite Lot wird insbesondere innerhalb der beanspruchten Varianten ein solches Material gewählt, das einen niedrigeren Schmelzpunkt als das erste Lot aufweist. Dies kann - wie dem Fachmann bekannt ist - anhand der binären bzw. ternären Phasendiagramme bestimmt werden. Gegebenenfalls kann das zweite Lot alleine auch einen höheren oder gleichen Schmelzpunkt als das erste Lot aufweisen, wobei sich der niedrigere Schmelzpunkt erst durch die Anlage an den zweiten Abschnitt bzw. ggf. auch durch die Anlage an die Zwischenschicht ergibt, so dass aufgrund der stattfindenden Diffusion während des Lötens eine Schmelzpunkterniedrigung auftritt und das zweite Lot von der Seite der Anlagefläche her aufschmilzt. Dies ist beispielsweise bei einem Zr-Lot und bei einer Zr-basierten Lotkombination der Fall, das mit Mo (aus dem zweiten Abschnitt) ein Eutektikum niedrigerer Schmelztemperatur bildet. Bei dem Schritt des Erwärmens während des zweiten Lötschrittes (Schritt D)) erfolgt das Erwärmen nur auf eine vergleichsweise niedrigere Temperatur und/oder nur für eine vergleichsweise kurze Dauer, um so zu erreichen, dass nur das zweite Lot, nicht aber das erste Lot schmilzt.

Der erste wie auch der zweite Abschnitt können gegebenenfalls auch Abschnitte eines jeweils größeren Bauteils oder einer Baugruppe sein. Die erfindungsgemäße Lötverbundschicht wird vorzugsweise aus genau den drei Lagen (erstes Lot, Zwischenschicht, zweites Lot) gebildet. Grundsätzlich besteht die Möglichkeit, dass auch noch weitere Schichten zwischen dem ersten und dem zweiten Abschnitt vorgesehen werden.

Gemäß einer Weiterbildung ist die bei dem zweiten Lötschritt maximal erreichte Ofentemperatur um mindestens 100 °C niedriger als die bei dem ersten Lötschritt maximal erreichte Ofentemperatur. Auf diese Weise wird effektiv eine thermische Alterung des zweiten Abschnittes vermieden. Insbesondere liegt die Temperaturdifferenz in einem Bereich zwischen einschließlich 200 °C bis einschließlich 400 °C, wodurch dieser vorteilhafte Effekt noch verstärkt wird. Wie hoch diese Temperaturdifferenz gewählt werden kann (bzw. welche MindestTemperatur bei dem jeweiligen Lötschritt eingestellt werden muss), hängt von den jeweils verwendeten Loten ab. Mit "maximaler Ofentemperatur" wird dabei auf die, beim Durchlaufen des Temperaturprofils maximal erreichte Ofentemperatur Bezug genommen (die üblicherweise für einen Zeitraum von 5-10 Minuten gehalten wird). Gemäß einer Weiterbildung wird bei dem ersten Lötschritt eine maximale Ofentemperatur im Bereich von einschließlich 1.800 °C bis einschließlich 2.000 °C, insbesondere im Bereich von einschließlich 1.900 °C bis einschließlich 1.980 °C, eingestellt und bei dem zweiten Lötschritt wird eine maximale Ofentemperatur im Bereich von einschließlich 1.550 °C bis einschließlich 1.720 °C, insbesondere im Bereich von einschließlich 1.550 °C bis einschließlich 1.650°C, eingestellt. Je nach Lotmaterialien für das zweite Lot sind bei dem zweiten Lötschritt beispielsweise maximale Ofentemperaturen im Bereich von 1.620 °C (+/- 10 °C), gegebenenfalls auch von 1.550 °C (+/-10 °C) möglich. Vorzugsweise wird diese maximale Ofentemperatur auch über eine vorbestimmte Zeitdauer, insbesondere in einem Bereich von 3 bis 20 Minuten, bevorzugt in einem Bereich von 5 bis 10 Minuten, gehalten. In der Regel kann dann davon ausgegangen werden, dass das jeweils aufzuschmelzende Lot im Wesentlichen diese maximale Ofentemperatur erreicht.

Gemäß einer Weiterbildung wird das Material des zweiten Lotes derart gewählt, dass es in der zweiten Anordnung einen Schmelzpunkt im Bereich von einschließlich 1.550 °C bis einschließlich 1.680 °C, insbesondere im Bereich von 1.600 °C (z.B. Ti-V-Lotkombination) bis 1.670 °C (z.B. Ti-Lot) aufweist. Auf diese Weise kann die Temperatur bei dem zweiten Lötschritt entsprechend niedrig gewählt werden und eine thermische Alterung des zweiten Abschnittes wird vermieden. Falls das jeweilige Lot durch eine Lotkombination gebildet wird, wird grundsätzlich der Schmelzpunkt als maßgeblich erachtet, der sich durch die betreffende Lot-Zusammensetzung (gemäß dem Phasendiagramm) ergibt, unabhängig davon, wie diese Lotkombination vorliegt (z.B. als Legierung, als Paste, als separate Folien, etc.). Denn selbst bei Vorliegen als getrennte Folien ist davon auszugehen, dass sich dieser Zusammensetzungsbereich zunächst an der Grenzfläche aufgrund von Diffusionseffekten einstellt und die Lotkombination von der Grenzfläche her aufschmilzt. Zusätzlich kann je nach Lot und je nach Material, welches an das Lot angrenzt, auch in dem Bereich dieser Grenzfläche aufgrund von Diffusionseffekten eine Schmelzpunktserniedrigung auftreten. Insbesondere ist bei einem Zr-Lot sowie bei einer Zr-basierten Lotkombinätion zu berücksichtigen, dass es in Kombination mit Mo ein Eutektikum bildet. Dementsprechend ergibt sich durch Anlage des Lotes an einen Abschnitt aus Mo oder einer Mo-basierten Legierung und durch Diffusionseffekte ein niedrigerer Schmelzpunkt (in der Regel der Schmelzpunkt des Eutektikums) als der Schmelzpunkt des Lotes allein.

Gemäß einer Weiterbildung wird das zweite Lot durch genau eines der nachfolgenden Lote gebildet:
- ein Ti-Lot,
- eine Ti-V-Lotkombination,
- ein Zr-Lot, oder
- eine Zr-Ti-Lotkombination.

Bei diesen Lotkombinationen kann, wie unterhalb im Detail erläutert wird, ein besonders niedriger Schmelzpunkt erzielt werden. Dadurch kann eine thermische Alterung des zweiten, metallischen Abschnittes weitgehend vermieden werden. Die binären Lotkombinationen weisen jeweils vollkommene Löslichkeiten im flüssigen Zustand auf, was für die Durchführung der Lötung vorteilhaft ist. Ferner eignen sich diese Lote besonders gut für eine zuverlässige Verbindung mit dem zweiten, metallischen Abschnitt. Diese vorteilhaften Eigenschaften werden in besonderem Maße dann erzielt, wenn das zweite Lot durch eine Ti-V-Lotkombination gebildet wird. Denn das binäre System aus Ti und V weist ein Schmelzpunktsminimum auf, so dass ein niedrigerer Schmelzpunkt als bei reinem Ti erreichbar ist. Insbesondere weist die Ti-V-Lotkombination einen Anteil von einschließlich 12 at.% bis einschließlich 50 at.% V und den verbleibenden Anteil Ti auf. Der V-Anteil an der Ti-V-Lotkombination liegt insbesondere in einem Bereich von einschließlich 20 at.% bis einschließlich 40 at.%. Besonders bevorzugt ist ein V-Anteil an der Ti-V-Lotkombination von genau 31 at.% oder in einem Bereich um 31 at.% (z.B. +/- 4 at.%), was dem Schmelzpunkts-Minimum des binären Systems entspricht.

Das erfindungsgemäße Verfahren ermöglicht ferner, dass nach dem Verbinden der Zwischenschicht mit dem ersten Abschnitt eine Nachbearbeitung der (freien) Oberfläche der Zwischenschicht erfolgen kann. Gemäß einer Weiterbildung wird die Oberfläche der Zwischenschicht des Teil-Verbundkörpers nach dem ersten Lötschritt und vor dem Herstellen der zweiten Anordnung mechanisch und/oder chemisch bearbeitet, wobei insbesondere eine mechanische Bearbeitung bevorzugt ist. Auf diese Weise kann während des ersten Lötschritts (der bei vergleichsweise hohen Temperaturen durchgeführt wird), eine stabile Zwischenschicht verwendet werden. Dementsprechend werden unerwünschte Verformungen oder ein Verzug, die bei dem ersten Lötschritt auftreten können, effektiv werden. Anschließend kann die Zwischenschicht auf eine gewünschte Dicke oder auf ein gewünschtes Dickenprofil reduziert werden. Insbesondere kann die lokale, durch die Zwischenschicht bereitgestellte Ausgleichswirkung gezielt eingestellt werden. Beispielsweise kann im Bereich der Brennbahn eine unterschiedliche Dicke als in den verbleibenden Bereichen eingestellt werden. Alternativ oder zusätzlich kann auch eine gewünschte Strukturierung eingebracht werden, beispielsweise um die Haftung des zweiten Lotes zu erhöhen. Gemäß einer Weiterbildung wird die Oberfläche der Zwischenschicht des Teil-Verbundkörpers nach dem ersten Lötschritt und vor dem Herstellen der zweiten Anordnung mechanisch derart bearbeitet, dass diese mindestens zwei unterschiedliche Niveaus aufweist. Beispielsweise kann bei einer Röntgendrehanode eine ringförmige Vertiefung mit konstant niedrigerem Niveau in die Zwischenschicht eingearbeitet werden. Der Niveauunterschied kann - je nach Gesamtdicke der Zwischenschicht - beispielsweise im Bereich von 0,2 bis 0,8 mm liegen. Insbesondere ist eine stufenförmige Ausbildung des mindestens einen Niveauunterschiedes bevorzugt. Hierdurch kann bei einer entsprechenden Formgebung des zu verbindenden Flächenabschnittes des zweiten, metallischen Abschnittes zusätzlich zu einer stoffschlüssigen Verbindung auch ein Formschluss bereitgestellt werden, was die Stabilität im Einsatz noch weiter erhöhen kann (insbesondere in radialer Richtung). In letzterem Fall ist bevorzugt, dass auch die, zwischen der Zwischenschicht und dem zweiten, metallischen Abschnitt eingesetzte, mindestens eine Lotfolie entsprechend in mehrere Teil-Lotfolien unterteilt ist, um so einen guten Eingriff der jeweiligen Kanten der Zwischenschicht und des zweiten, metallischen Abschnittes zu ermöglichen.

Gemäß einer Weiterbildung liegt die mittlere Dicke der Zwischenschicht im Bereich von einschließlich 100 µm bis einschließlich 2.000 µm. Gute Ergebnisse wurden insbesondere bei Schichtdicken im Bereich von 600 µm erzielt, wobei dieser Bereich (+/- 50 µm) auch aus Kostengründen vorteilhaft ist. Bei der Verwendung von Nb und/oder Ta als Haupt-Bestandteil der Zwischenschicht ist aufgrund von deren elastisch plastischen Eigenschaften bei den fraglichen Einsatztemperaturen vorteilhaft, wenn diese vergleichsweise dick ausgebildet sind (z.B. auch Bereiche von einschließlich 1.200 µm bis einschließlich 2.000 µm möglich), um so eine besonders gute Ausgleichsfunktion zwischen dem ersten und dem zweiten Abschnitt bereitzustellen. Erfolgt nach dem ersten Lötschritt eine Bearbeitung der Zwischenschicht, die zu einem Materialabtrag führt, so wird mit den oberhalb angegebenen Dicken auf die reduzierte (ggf. mittlere) Schichtdicke der Zwischenschicht Bezug genommen. Eine vor dem Bearbeiten eingesetzte Schichtdicke der Zwischenschicht ist insbesondere entsprechend höher, beispielsweise im Bereich von einschließlich 350 µm bis einschließlich 3.000 µm. Erfolgt eine Bearbeitung der Zwischenschicht nach dem ersten Lötschritt, so können insbesondere gute Ergebnisse bei (Ausgangs-) Schichtdicken im Bereich von 1.000 µm erzielt werden, wobei dieser Bereich (+/- 50 µm) auch aus Kostengründen vorteilhaft ist. Allgemein wird bei der Angabe von Schichtdicken (vor oder nach dem Löten) auf eine Dicke Bezug genommen, die an einem, senkrecht zu der betreffenden Schicht verlaufenden Querschnitt (der bei Röntgendrehanoden insbesondere entlang der radialen Richtung verläuft) gemessen wird. Variiert die Schichtdicke über den Verlauf innerhalb des betreffenden Querschnitts, so wird sie gemittelt, wobei hierzu das arithmetische Mittel einer Mehrzahl von Messpunkten, die über den Schichtverlauf entlang dem Querschnitt gleichmäßig verteilt sind, herangezogen wird.

Gemäß einer Weiterbildung liegt die mittlere Dicke des ersten Lotes im Bereich von einschließlich 80 µm bis einschließlich 500 µm, wobei Dicken im Bereich von 250 µm (+/- 50 µm) besonders gut geeignet sind. Gemäß einer Weiterbildung liegt die mittlere Dicke des zweiten Lotes im Bereich von einschließlich 30 µm bis einschließlich 400 µm, wobei Dicken im Bereich von 180 µm (+/- 50 µm) besonders gut geeignet sind. Hierbei wird auf die Dicken vor dem Schritt des Lötens Bezug genommen (zumindest für die Fälle, in denen Folien oder Beschichtungen aus den jeweiligen, reinen Lotmaterialien eingesetzt werden), bei Pasten können sich - je nach Zusammensetzung - etwas höhere Schichtdicken ergeben. Nach dem Schritt des Lötens treten zumindest im Bereich der Grenzflächen Diffusionseffekte auf.

Gemäß einer Weiterbildung ist der erste Abschnitt aus einem C-basierten Material gebildet. Geeignete Materialien sind insbesondere Graphit oder ein Kohlenstoff-faserverstärkter Kohlenstoff (CFC: engl.: carbon-fiber-reinforced carbon). Gemäß einer Weiterbildung ist der erste Abschnitt aus einer Keramik gebildet. Geeignete Keramiken sind insbesondere Siliziumcarbid (SiC), Siliziumnitrid (Si₃N₄), Aluminiumnitrid (AIN) und Borcarbid (B₄C). Gemäß einer Weiterbildung wird die Keramik aus einer faserverstärkten Keramik gebildet. Geeignete, faserverstärkte Keramiken sind unter anderem Kohlenstoff-faserverstärkte und Siliziumcarbid-faserverstärkte Keramiken, insbesondere Kohlenstoff-faserverstärktes Siliziumcarbid (C-SiC) und Siliziumcarbid-faserverstärktes Siliziumcarbid (SiC-SiC). Ferner ist gemäß einer Weiterbildung vorgesehen, dass der zweite Abschnitt aus Mo oder einer Mo-basierten Legierung gebildet ist. Wie oberhalb erläutert wird, sind dies insbesondere im Bereich von Röntgenanoden einsetzte Materialien. Besonders gängige Materialien sind insbesondere Graphit für den ersten Abschnitt und eine Mo-basierte Legierung (insbesondere TZM oder auch MHC) für den zweiten Abschnitt. Gemäß einer Weiterbildung bilden sowohl der erste Abschnitt als auch der zweite Abschnitt jeweils Abschnitte von Bauteilen einer Röntgenanode, insbesondere einer Röntgendrehanode. Insbesondere wird - wie oberhalb erläutert wird - der erste Abschnitt durch einen Abstrahlkörper und der zweite Abschnitt durch einen Grundkörper einer Röntgendrehanode gebildet. Wie oberhalb erläutert wird, ist das erfindungsgemäße Verfahren auch für die Verbindung anderer Bauteile einer Röntgendrehanode geeignet. Ferner kann das erfindungsgemäße Verfahren auch bei der Realisierung anderweitiger Konzepte von Röntgendrehanoden eingesetzt werden, sofern entsprechende Abschnitte an einer Röntgendrehanode oder daran angrenzender Bauteile zu verbinden sind.

Die vorliegende Erfindung betrifft ferner einen hochtemperaturfesten Verbundkörper, bei welchem ein erster, nicht-metallischer Abschnitt über eine Lötverbundschicht mit einem zweiten, metallischen Abschnitt aus Mo, einer Mo-basierten Legierung, W oder einer W-basierten Legierung verbunden ist. Dabei ist der erste Abschnitt über eine erste, aus einem Zr-Lot gebildete Lötverbindung mit einer Zwischenschicht, die zumindest in einem Kernbereich zu mindestens 90 at.% aus mindestens einem der Elemente Ta, Nb und/oder W gebildet ist, verbunden. Die Zwischenschicht wiederum ist über eine zweite Lötverbindung, die aus einem Ti-Lot, aus einer Ti-V-Lotkombination, aus einem Zr-Lot oder aus einer Zr-Ti-Lotkombination gebildet ist, mit dem zweiten Abschnitt verbunden. Bei dem erfindungsgemäßen hochtemperaturfesten Verbundkörper werden im Wesentlichen die gleichen Vorteile wie bei dem erfindungsgemäßen Verfahren erzielt. Wie oberhalb beschrieben wird, ermöglichen insbesondere die genannten Lot-Materialien (Ti-Lot, Ti-V-Lotkombination, Zr-Lot oder Zr-Ti-Lotkombination), dass aufgrund von deren niedrigem Schmelzpunkt zur Realisierung der zweiten Lötverbindung eine vergleichsweise niedrige Löttemperatur erforderlich ist. Dementsprechend wird - sofern das Lötverfahren zweistufig ausgerührt wird - eine thermische Alterung des metallischen Abschnittes weitgehend vermieden. Insbesondere weist der metallische Abschnitt innerhalb des Verbundkörpers eine hohe Festigkeit auf, da diese nicht oder nur geringfügig während des zweiten Lötschrittes reduziert wurde. Ferner ergibt eine statistische Auswertung von zweiten Abschnitten der erfindungsgemäßen Verbundkörper, dass diese aufgrund der niedrigeren Löttemperatur während des zweiten Lötschrittes eine höhere, mittlere Biegebruchfestigkeit aufweisen und ferner die statistische Breite der Verteilung (der Werte für die Biegebruchfestigkeit) schmäler ist als bei Durchführung eines einheitlichen Lötschrittes mit einer maximalen (höheren) Löttemperatur, die zum Schmelzen des Zr-Lotes erforderlich ist. Sowohl die höheren Werte für die Biegebruchfestigkeit als auch die schmale Verteilungskurve sind insbesondere dann vorteilhaft, wenn im Rahmen der Produktion eine gewünschte, relativ hohe Festigkeit des zweiten, metallischen Abschnittes innerhalb des Verbundkörpers bereitgestellt werden soll.

Mit dem Merkmal, dass die jeweilige Lötverbindung aus einem der genannten Lote gebildet wird, wird auf eine Ausgestaltung Bezug genommen, dass das Lot zur Herstellung der Verbindung zwischen dem jeweiligen Abschnitt und der Zwischenschicht ausschließlich aus den genannten Lot-Materialien gebildet wird. Es ist jedoch zu berücksichtigen, dass während des Lötens Diffusion auftritt und dementsprechend innerhalb der Lötschicht (nach dem jeweiligen Lötschritt) insbesondere Materialien aus der Zwischenschicht und aus dem jeweiligen Abschnitt enthalten sind. Ferner kann auch vorgesehen sein, dass der erste und/oder der zweite Abschnitt und/oder die Zwischenschicht mit einer Beschichtung (z.B. CVD-Beschichtung, PVD-Beschichtung, Plasmaspritz-Beschichtung, etc.), die beispielsweise als Diffusionssperre oder Schutz des jeweiligen Abschnittes dient, versehen ist/sind. Bevorzugt ist jedoch, dass das Lot jeweils direkt an das Grundmaterial des ersten und/oder zweiten Abschnittes sowie an das Grundmaterial der Zwischenschicht angrenzt.

Insbesondere bei Verwendung von Ti-Lot und von Ti-V-Lotkombinationen und zum Teil auch allgemein bei Ti-basierten Lotkombinationen ist ein vorteilhafter Effekt, dass diese einen vergleichsweise niedrigen Schmelzpunkt aufweisen. Weiterhin ist vorteilhaft, dass in der (zweiten) Anordnung des Verbundkörpers während der Durchführung des zweiten Lötschrittes Material aus der angrenzenden Zwischenschicht und Material aus dem angrenzenden, zweiten Abschnitt in die Lötschicht hineindiffundiert. Bei diesen Loten führt diese Diffusion bei den vorliegend in Frage kommenden Materialien zu einer Schmelzpunktserhöhung. Dies führt dazu, dass während der Durchführung der Lötung (bei moderaten Temperaturen) das Material der Lötschicht von den an den zweiten Abschnitt und an die Zwischenschicht angrenzenden Grenzflächen beginnend zu der Mitte der Lötschicht hin erstarrt. Dieser fortschreitende Erstarrungsvorgang ist für die Ausbildung der Lötschicht vorteilhaft. Weiterhin ist insbesondere für Anwendungen bei relativ hohen Einsatztemperaturen vorteilhaft, dass die Wiederaufschmelztemperatur der zweiten Lötverbindung höher ist als die Schmelztemperatur des reinen, zweiten Lotes. Je höher die Löttemperatur und/oder Dauer des zweiten Lötschrittes ist, desto stärker sind die Diffusionseffekte ausgeprägt und dementsprechend wird die Wiederaufschmelztemperatur entsprechend weiter erhöht. Indem der zweite Lötschritt bevorzugt bei vergleichsweise niedrigen Temperaturen durchgeführt wird, sind die Diffusionseffekte relativ klein, beispielsweise verglichen zu einem einheitlichen Lötschritt, wie er in der US 2011/0103553 A1 und der JP 2010-140879 A beschrieben ist. Dementsprechend ist ein, die zweite Lötverbindung charakterisierendes Merkmal, welches auf die vergleichsweise niedrigen Temperaturen während des zweiten Lötschrittes zurückführbar ist, die für das jeweils eingesetzte Lot vergleichsweise niedrige Wiederaufschmelztemperatur.

Gemäß einer Weiterbildung ist die zweite Lötverbindung aus einem Ti-Lot mit einer Wiederaufschmelztemperatur von maximal 1.860 °C gebildet. Insbesondere liegt die Wiederaufschmelztemperatur in einem Bereich von einschließlich 1.740 °C bis 1.790 °C. Gemäß einer Weiterbildung ist die zweite Lötverbindung aus einer Ti-V-Lotkombination mit einer Wiederaufschmelztemperatur von maximal 1.780 °C gebildet. Insbesondere liegt die Wiederaufschmelztemperatur in einem Bereich von einschließlich 1.650 °C bis einschließlich 1.700 °C. Die Werte beziehen sich dabei auf einen Verbundkörper im Neuzustand (d.h. nach Durchführung der Lötung). Denn bei einem Einsatz bei hohen Temperaturen tritt weitere Diffusion auf, was zu einer weiteren Erhöhung der Wiederaufschmelztemperatur führen würde. Das anwendbare Messverfahren zur Bestimmung der Wiederaufschmelztemperatur wird unterhalb unter Bezugnahme auf die Figuren erläutert.

Geeignete Bereiche für die mittleren Dicken der ersten Lötverbindung, des Kernbereichs der Zwischenschicht und der zweiten Lötverbindung innerhalb des (gelöteten) hochtemperaturfesten Verbundkörpers entsprechen jeweils den oberhalb für die mittleren Dicken des ersten Lotes, der Zwischenschicht und des zweiten Lotes angegebenen Werte. Während der Durchführung der Lötschritte treten die oberhalb beschriebenen Diffusionseffekte im Bereich der Grenzflächen auf. Als Grenzfläche einer Schicht bzw. eines Abschnittes im gelöteten Zustand wird insbesondere die Fläche gewählt, bei welcher die Konzentration des Materials der betreffenden Schicht bzw. des betreffenden Abschnitts auf 90 at.% abgefallen ist. Ferner ist zu berücksichtigen, dass ein Teil des Lotes während der Durchführung des Lötschrittes an einem Randbereich austreten kann. Dementsprechend sind diese Effekte zu berücksichtigen, wenn in dem gelöteten, hochtemperaturfesten Verbundkörper eine bestimmte Dicke einer Schicht gewünscht wird.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung einer Röntgendrehanode in Querschnittsansicht;
- Fig. 2:: eine schematische Darstellung einer Zugprobe mit den zugehörigen Abmessungen;
- Fig. 3:: ein Phasendiagramm des ternären Systems Ti-V-Mo;
- Fig. 4:: ein Phasendiagramm des ternären Systems Ti-V-Ta;
- Fig. 5:: eine schematische Darstellung in Querschnittsansicht zur Veranschaulichung des ersten Lötschrittes einer Ausführungsform der vorliegenden Erfindung; und
- Fig. 6:: eine schematische Darstellung in Querschnittsansicht zur Veranschaulichung des zweiten Lötschrittes.

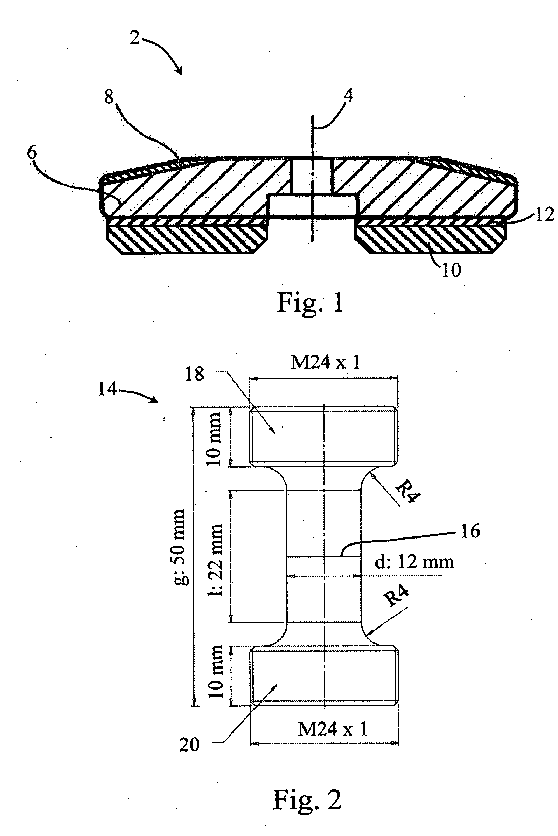

In Fig. 1 ist schematisch der Aufbau einer Ausführungsform einer Röntgendrehanode -2- dargestellt. Die Röntgendrehanode -2- ist rotationssymmetrisch zu einer Rotations-Symmetrieachse -4- ausgebildet. Die Röntgendrehanode -2-weist einen tellerförmigen Grundkörper -6- auf, der auf einer entsprechenden Welle montierbar ist. Deckseitig ist auf dem Grundkörper -6- ein ringförmiger Brennbahnbelag -8- aufgebracht. Der Abschnitt, über den sich der ringförmige Brennbahnbelag -8- erstreckt, weist die Form eines Kegelstumpfes (eines flachen Kegels) auf. Der Brennbahnbelag -8- überdeckt zumindest den Bereich des Grundkörpers -6-, der im Einsatz mit einem Elektronenstrahl abgetastet wird. Rückseitig und gegenüberliegend von dem Brennbahnbelag -8- ist der Grundkörper -6- mit einem Abstrahlkörper -10- flächig verbunden. Der Grundkörper -6- ist mit dem Abstrahlkörper -10- über eine Lötverbundschicht -12- verbunden, so dass die Gesamtanordnung eine Ausführungsform eines erfindungsgemäßen, hochtemperaturfesten Verbundkörpers bildet. Bei der vorliegenden Ausführungsform ist der Grundkörper -6- aus umgeformten TZM gebildet und der Abstrahlkörper -10- ist aus Graphit gebildet. Dabei ist der Abstrahlkörper -10- über eine erste, aus einem Zr-Lot gebildete Lötverbindung mit einer Zwischenschicht aus reinem Ta (zu mindestens 98 at.% Ta) verbunden. Die Zwischenschicht ist über eine zweite, aus einer Ti-V-Lotkombination gebildeten Lötverbindung mit dem Grundkörper -6- verbunden.

Nachfolgend wird allgemein das zur Bestimmung der Wiederaufschmelztemperatur anwendbare Messverfahren erläutert. Dabei ist zu berücksichtigen, dass die mit diesem Messverfahren bestimmte Wiederaufschmelztemperatur typischerweise Schwankungen in einem Bereich von +/- 20°C aufweist. Zunächst wird aus dem gelöteten Verbundkörper eine Zugprobe -14-, deren Erstreckungsrichtung senkrecht zu der Ebene der zu untersuchenden Lötverbundschicht -16- verläuft und bei welcher die Lötverbundschicht -16- mittig angeordnet ist, herausgearbeitet. Die relevanten Abmessungen der Zugprobe -14- sind in Fig. 2 dargestellt, wobei die Abmessungen in Millimeter angegeben sind. Wesentliche Kenngrößen der Abmessungen sind insbesondere der Durchmesser -d- des kreisförmigen Querschnitts in dem zentralen Bereich der Zugprobe von 12 mm, der über eine Länge -l- von 22 mm konstant ist. Die Gesamtlänge -g- der Zugprobe -14- beträgt 50 mm, wobei die endseitigen Abschnitte -18-, - 20- einen vergrößerten, kreisförmigen Querschnitt aufweisen. Zur Befestigung für die Durchführung des Zugversuches sind an den endseitigen Abschnitten - 18-, -20- Außengewinde ausgebildet, die vorliegend durch ein metrisches M24-Gewinde (d.h. 24 mm Außendurchmesser) mit einer Steigung von 1 gebildet werden.

Die Zugprobe wird in einen Warmzugofen eingebaut und eine konstante Vorkraft von 90 N (N: Newton) angelegt. Aufgrund der bei hohen Temperaturen auftretenden Diffusionseffekte, welche das Ergebnis der Messung der Wiederaufschmelztemperatur beeinflussen können, wird die Temperatur sehr schnell mit einer Heizrate von 50 °C/min (min: Minute) auf 50 °C unterhalb der erwarteten Wiederaufschmelztemperatur erhöht. Bei einer angenommenen Wiederaufschmelztemperatur von 1650 °C sollte die Zugprobe z.B. mit dieser hohen Heizrate bis zu einer Ofentemperatur von 1600 °C erwärmt werden. Nach einer Haltezeit von 10 min, die zur Durchwärmung der Zugprobe dient, wird die Temperatur nun mit einer signifikant geringeren Heizrate von 5 °C/min (min: Minute) weiter erhöht. Während dieser Erhöhung wird gemessen, wann ein Abfall der an der Zugprobe anliegenden Vorkraft auf null (0 N) bzw. im Wesentlichen auf null auftritt und die zu diesem Zeitpunkt gemessene Ofentemperatur wird als maßgeblicher Wert für die Wiederaufschmelztemperatur bestimmt. Wurde die Zugprobe bereits für 60 Minuten bei einer Ofentemperatur von über 1.000 °C gehalten und die Wiederaufschmelztemperatur wurde noch nicht erreicht, so wird das Experiment mit dieser Zugprobe abgebrochen, da andernfalls die Diffusionseffekte das Messergebnis zu stark beeinflussen würden. Es wird dann ein erneutes Experiment mit einer neuen Zugprobe gestartet, wobei dann mit der hohen Heizrate auf einen entsprechend höheren Temperaturwert hochgeheizt wird, um dann das Experiment in entsprechender Weise durchzuführen.

Da die Temperaturmessung im Hochvakuum bei Temperaturen über 1000 °C hohe Ungenauigkeiten aufweisen kann, ist es vorteilhaft, das Prüfsystem mit einer Zugprobe zu kalibrieren, die eine konstant messbare Schmelztemperatur aufweist. Es wird daher eine Zr-gelötete Zugprobe (mit den oberhalb angegebenen Abmessungen) mit nur einer, aus einem Zr-Lot gebildeten Lötverbindung, die zumindest zu einer Seite an einen Abschnitt aus Mo oder einer Mo-basierten Legierung angrenzt (die andere Seite der Zr-Lötverbindung grenzt an einen Abschnitt aus Graphit an), im Warmzugofen verbaut und gemäß dem oberhalb beschriebenen Messverfahren gemessen. Aufgrund der (sehr zuverlässig realisierbaren) Ausbildung eines Eutektikums von Zr mit Mo wird von einer Schmelztemperatur von 1.550 °C ausgegangen. Kann dieser Schmelzpunkt anhand der Messung bestätigt werden (d.h. der gemessene Schmelzpunkt liegt in einem Bereich von +/- 25°C um den erwarteten Schmelzpunkt von 1.550 °C), so ist die bestehende Temperaturmessung akzeptabel. Andernfalls ist eine entsprechende Anpassung der Temperaturmessung durchzuführen, bis dieser erwartete Schmelzpunkt verifiziert werden kann. Alternativ kann auch ein anderweitiges, gleichwertiges Kalibierverfahren zur korrekten Temperaturbestimmung innerhalb des Warmzugofens verwendet werden.

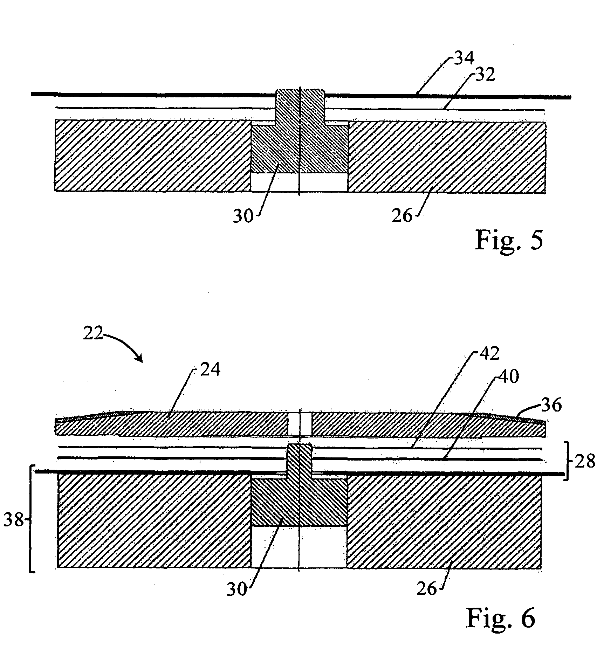

Nachfolgend wird unter Bezugnahme auf die Fig. 5 und 6 ein Ausführungsbeispiel zum Herstellen eines erfindungsgemäßen Verbundkörpers, der durch eine Röntgendrehanode -22- gebildet wird, erläutert. Bei dem Ausführungsbeispiel wird ein, aus TZM gebildeter Grundkörper -24- mit einem, aus Graphit gebildeten Abstrahlkörper -26- über eine Lötverbundschicht -28- flächig verbunden. Zunächst wird der Graphit-Abstrahlkörper -26- an der zu verbindenden Oberfläche durch mechanische Bearbeitung mit einer Strukturierung, insbesondere mit einer Rillenstruktur, versehen. Die Rillenstruktur weist eine Tiefe von ca. 350 µm auf. Anschließend wird eine Thermoschockreinigung und eine Hochvakuum-Glühung des Graphit-Abstrahlkörpers -26- vorgenommen. Ferner wird ein Zentrierungsadapter -30- aus Graphit bereitgestellt, der zur Zentrierung der Komponenten während des Lötens dient. Es werden eine 1 mm dicke Ta-Lotfolie (zu mindestens 98 at.% aus Ta) und eine 0,2 mm dicke Zr-Lotfolie (zu mindestens 95 at.% aus Zr) mittels Laserschneiden zugeschnitten und einer Ultraschallreinigung unterzogen. Anschließend werden zur Herstellung der ersten Anordnung der Graphit-Abstrahlkörper -26-, die Zr-Lotfolie -32-, und die Ta-Lotfolie -34- in dieser Abfolge aufeinander geschichtet (vgl. Fig. 5), wobei der Zentrierungsadapter -30- zur Zentrierung der Schichten dient. Die erste Anordnung wird in einem Hochvakuumofen einem ersten Lötschritt unterzogen. Hierbei wird die erste Anordnung zunächst auf 1.600 °C mit einer durchschnittlichen Heizrate im Bereich von 10 °C/min bis 20°C/min (min: Minute), insbesondere bei einer Heizrate von 15 °C/min, unter Hochvakuum erwärmt. Bei 1.600 °C wird eine Haltezeit im Bereich von 10 bis 20 Minuten (insbesondere 15 Minuten) eingelegt, um eine Durchwärmung der Komponenten zu gewährleisten. Anschließend wird die Temperatur mit einer Heizrate im Bereich von 10 °C/min bis 20 °C/min (min: Minute), insbesondere bei einer Heizrate von 15°C/min, bis auf eine maximale Temperatur von 1.915 °C erhöht. Nach Erreichen der Temperatur von 1.915 °C wird erneut eine Haltezeit (bei dieser Temperatur) im Bereich von 5 bis 10 Minuten (insbesondere 8 Minuten) eingelegt. Danach wird die erste Anordnung langsam innerhalb des Ofens im Hochvakuum auf Raumtemperatur abgekühlt. Der dadurch erhaltene Teil-Verbundkörper -38- wird einer zerstörungsfreien Prüfung (Ultraschallprüfung) unterzogen.

Der Grundkörper -24-, auf dem bei der dargestellten Ausführungsform deckseitig ein Brennbahnbelag -36- vorgesehen ist, wird mechanisch bearbeitet und anschließend einer Ultraschallreinigung unterzogen. Bei der vorliegenden Ausführungsform wird auch die Ta-Zwischenschicht des Teil-Verbundkörpers -38-zur Einstellung einer gewünschten Stärke der Ta-Zwischenschicht mechanisch bearbeitet. Anschließend wird auch der Teil-Verbundkörper 38 einer Ultraschallreinigung unterzogen. Im Rahmen der Vorbereitung des zweiten Lötschrittes wird ein neuer Zentrierungsadapter 30 gefertigt (sofern erforderlich). Zur Bereitstellung einerTi-V-Lotkombination werden eine 0,1 mm dicke V-Lotfolie (zu mindestens 98 at.% aus V) und eine 0,25 mm dicke Ti-Lotfolie (zu mindestens 98 at.% aus Ti) mittels Laserschneiden zugeschnitten und anschließend einer Ultraschallreinigung unterzogen. Anschließend werden zur Herstellung der zweiten Anordnung der Teil-Verbundkörper -38-, die Ti-Lotfolie -40-, die V-Lotfolie -42- und der Grundkörper -24- in dieser Abfolge aufeinander geschichtet (vgl. Fig. 6), wobei der Zentrierungsadapter -30- zur Zentrierung der Schichten dient. Die zweite Anordnung wird in einem Hochvakuumofen im Hochvakuum einem zweiten Lötschritt unterzogen. Hierbei wird die zweite Anordnung zunächst auf 1.500 °C mit einer durchschnittlichen Heizrate im Bereich von 20 °C/min bis 40°C/min (min: Minute), insbesondere bei einer Heizrate von 30 °C/min, erwärmt. Bei 1.500 °C wird eine Haltezeit im Bereich von 10 bis 20 Minuten (insbesondere 15 Minuten) eingelegt, um eine Durchwärmung der Komponenten zu gewährleisten. Anschließend wird die Temperatur mit einer Heizrate im Bereich von 10°C/min bis 30 °C/min (min: Minute), insbesondere bei einer Heizrate von 20°C/min, bis auf eine maximale Temperatur von 1.650 °C erhöht. Nach Erreichen der Temperatur von 1.650 °C wird erneut eine Haltezeit (bei dieser Temperatur) im Bereich von 5 bis 10 Minuten (insbesondere 8 Minuten) eingelegt. Danach wird der erhaltene Verbundkörper langsam innerhalb des Hochvakuumofens im Hochvakuum auf Raumtemperatur abgekühlt. Der erhaltene Verbundkörper wird einer zerstörungsfreien Prüfung (Ultraschallprüfung) unterzogen.

Das beschriebene Herstellungsverfahren ist entsprechend durchführbar, wenn an Stelle der Ta-Zwischenschicht eine anderweitige, der oberhalb beschriebenen Zwischenschichten eingesetzt wird. Ferner sind für das zweite Lot auch andere der oberhalb allgemein beschriebenen Materialien verwendbar, wobei je nach eingesetztem Material der zu erwartende Schmelzpunkt innerhalb der zweiten Anordnung abzuschätzen ist und dementsprechend die maximale Temperatur während des zweiten Lötschrittes anzupassen ist.

Besonders bevorzugte Materialien für das zweite Lot sind insbesondere ein TiLot, eine Ti-V-Lotkombination, ein Zr-Lot, sowie eine Zr-Ti-Lotkombination. Bei diesen Materialien wird, wie unterhalb im Detail erläutert wird, ein besonders niedriger Schmelzpunkt erzielt, wobei dies bei den genannten Lotkombinationen zumindest innerhalb bestimmter Zusammensetzungsbereiche gilt. Dadurch kann eine thermische Alterung des zweiten, metallischen Abschnittes weitgehend vermieden werden.

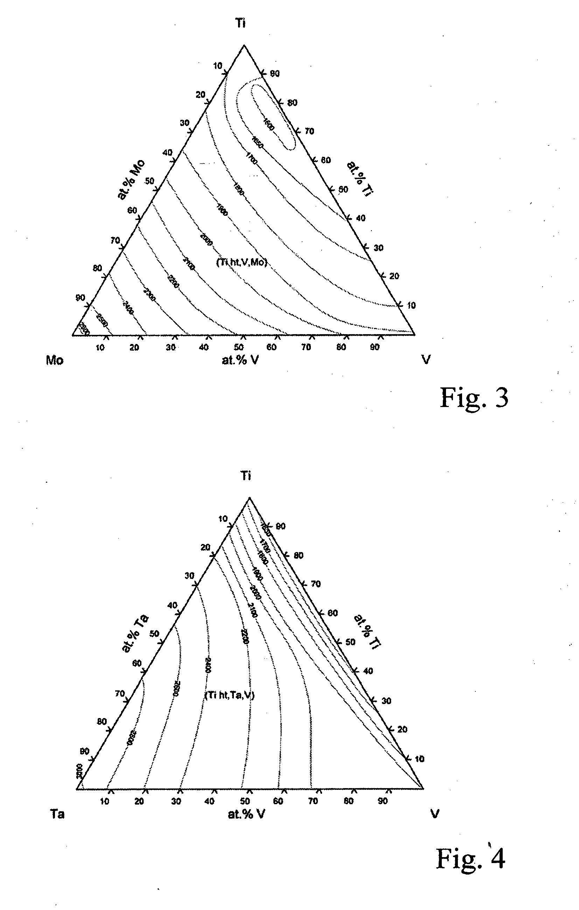

Die eine Gruppe von bevorzugten Materialien bilden ein Ti-Lot mit einem Schmelzpunkt von 1.670 °C und eine Ti-V-Lotkombination mit einem Schmelzpunktsminimum von 1.600 °C bei einer Zusammensetzung von 31 at.% V und 69 at.% Ti. Vergleichsweise niedrige Schmelzpunkte der Ti-V-Lotkombination werden jedoch über einen vergleichsweise breiten Zusammensetzungsbereich von 20 - 40 at.% V erzielt. Dieser Zusammenhang ist auch den beiden, in den Figuren 3 und 4 dargestellten Phasendiagramme der ternären Systeme Ti-V-Mo (Fig. 3) und Ti-V-Ta (Fig. 4) entnehmbar. Weiterhin ist anhand der Phasendiagramme der Fig. 3 und 4 auch ersichtlich, dass mit zunehmender Diffusion von Mo und/oder Ta in das betreffende Lot (Ti-Lot bzw. Ti-V-Lotkombination) eine entsprechend zunehmende Erhöhung des Schmelzpunktes des zweiten Lotes erfolgt (entsprechend auch bei einer Nb-Zwischenschicht). Dementsprechend ermöglichen ein Ti-Lot und eine Ti-V-Lotkombination, dass der zweite Lötschritt bei einer vergleichsweise niedrigen Ofentemperatur durchgeführt wird. Insbesondere sind für den zweiten Lötschritt maximale Ofentemperaturen im Bereich von 1.600 °C bis 1.720 °C geeignet, je nachdem, wie hoch der Temperatur-Sicherheitsabstand zum Schmelzpunkt gewählt wird (typischerweise 50°C über den, zu erwartenden Schmelzpunkt), um ein Schmelzen des Lotes sicherzustellen. Ferner ermöglichen diese Lote aufgrund der beschriebenen Diffusionseffekte, dass die daraus erhaltene Lötverbindung vergleichsweise hohen Einsatztemperaturen standhält.

Die andere Gruppe von bevorzugten Materialien bilden ein Zr-Lot sowie eine Zr-Ti-Lotkombination. Aufgrund der oberhalb beschriebenen Diffusionseffekte bildet sich dann, wenn diese Lote direkt angrenzend an einen zweiten Abschnitt aus Mo oder einer Mo-Legierung angeordnet sind, zuverlässig ein Eutektikum zwischen Zr und Mo mit einem Schmelzpunkt von 1.550 °C aus. Wird eine Zr-Ti-Lotkombination verwendet, so kann im Bereich des Schmelzpunktsminimums von ca. 1.554 °C dieser Lotkombination gearbeitet werden. Insbesondere sind für den zweiten Lötschritt maximale Ofentemperaturen im Bereich von 1.550 °C bis 1.630 °C geeignet, je nachdem, wie hoch der Temperatur-Sicherheitsabstand zum Schmelzpunkt gewählt wird (typischerweise 50°C über den, zu erwartenden Schmelzpunkt), um ein Schmelzen des Lotes sicherzustellen. Dementsprechend sind bei diesen Loten besonders niedrige Löttemperaturen für den zweiten Lötschritt möglich. Je nach Materialien kann die Temperaturbelastbarkeit zum Teil etwas niedriger als bei dem oberhalb beschriebenen Ti-Lot und der Ti-V-Lotkombination sein.

Weiterhin ist zu berücksichtigen, dass im Falle einer aus zwei Lotfolien gebildeten Ti-V-Lotkombination für das zweite Lot bevorzugt ist, wenn die Ti-Lotfolie angrenzend an die Zwischenschicht ausgebildet ist.

## Patentansprüche

1. Verfahren zur Herstellung eines hochtemperaturfesten Verbundkörpers (2; 22) durch flächiges Verbinden eines ersten, nicht-metallischen Abschnittes (10; 26) über eine Lötverbundschicht (12; 28) mit einem zweiten, metallischen Abschnitt (6; 24) aus Mo, einer Mo-basierten Legierung, W oder einer W-basierten Legierung, **gekennzeichnet durch** nachfolgende Schritte:
A) Herstellen einer ersten Anordnung aus dem ersten Abschnitt (10; 26), einem ersten Zr-Lot (32) und einer Zwischenschicht (34) in dieser Abfolge,
wobei die Zwischenschicht (34) zu mindestens 90 at.% aus mindestens einem der Elemente Ta, Nb und/oder W gebildet ist,
B) Erwärmen der ersten Anordnung in einem ersten Lötschritt derart, dass das Zr-Lot (32), nicht aber die Zwischenschicht (34) schmilzt und ein Teil-Verbundkörper (38) erhalten wird,
C) Herstellen einer zweiten Anordnung aus dem Teil-Verbundkörper (38), einem, an die Zwischenschicht (34) angrenzenden zweiten Lot (40, 42) und dem zweiten Abschnitt (6; 24) in dieser Abfolge,
wobei das zweite Lot (40, 42) **durch** genau ein Material der Gruppe Ti, Ti-basierte Lotkombination, V-basierte Lotkombination, Zr oder Zr-basierte Lotkombination gebildet wird und derart gewählt ist, dass dieses in der zweiten Anordnung bei einer niedrigeren Temperatur als das erste Zr-Lot (32) schmilzt, und
D) Erwärmen der zweiten Anordnung in einem zweiten Lötschritt derart, dass das zweite Lot (40, 42), nicht aber die aus dem ersten Zr-Lot (32) erhaltene Lötverbindung schmilzt.

2. Verfahren gemäß Anspruch 1, **dadurch gekennzeichnet, dass** die bei dem zweiten Lötschritt maximal erreichte Ofentemperatur um mindestens 100 °C niedriger als die bei dem ersten Lötschritt maximal erreichte Ofentemperatur ist.

3. Verfahren gemäß Anspruch 1 oder 2, **dadurch gekennzeichnet, dass** bei dem ersten Lötschritt eine maximale Ofentemperatur im Bereich von einschließlich 1.800 °C bis einschließlich 2.000 °C eingestellt wird und dass bei dem zweiten Lötschritt eine maximale Ofentemperatur im Bereich von einschließlich 1.550 °C bis einschließlich 1.720 °C eingestellt wird:

4. Verfahren gemäß einem der vorangehenden Ansprüche, **dadurch gekennzeichnet, dass** das Material des zweiten Lotes derart gewählt wird, dass es in der zweiten Anordnung einen Schmelzpunkt im Bereich von einschließlich 1.550 °C bis einschließlich 1.680 °C aufweist.

5. Verfahren gemäß einem der vorangehenden Ansprüche, **dadurch gekennzeichnet, dass** das zweite Lot (40, 42) durch genau eines der nachfolgenden Lote gebildet wird:
- ein Ti-Lot,
- eine Ti-V-Lotkombination (40, 42),
- ein Zr-Lot, oder
- eine Zr-Ti-Lotkombination.

6. Verfahren gemäß einem der vorangehenden Ansprüche, **dadurch gekennzeichnet, dass** das zweite Lot durch eine Ti-V-Lotkombination (40, 42) mit einem Anteil von einschließlich 12 at.% bis einschließlich 50 at.% V und dem verbleibenden Anteil Ti gebildet wird.

7. Verfahren gemäß einem der vorangehenden Ansprüche, **dadurch gekennzeichnet, dass** die Oberfläche der Zwischenschicht (34) des Teil-Verbundkörpers (38) vor dem Herstellen der zweiten Anordnung mechanisch bearbeitet wird.

8. Verfahren gemäß einem der vorangehenden Ansprüche, **dadurch gekennzeichnet, dass** die mittlere Dicke der Zwischenschicht (34) im Bereich von einschließlich 0,1 mm bis einschließlich 2 mm ist.

9. Verfahren gemäß einem der vorangehenden Ansprüche, **dadurch gekennzeichnet, dass** die mittlere Dicke des ersten Lotes (32) im Bereich von einschließlich 80 µm bis einschließlich 500 µm liegt und dass die mittlere
Dicke des zweiten Lotes (40, 42) im Bereich von einschließlich 30 µm bis einschließlich 400 µm liegt.

10. Verfahren gemäß einem der vorangehenden Ansprüche, **dadurch gekennzeichnet, dass** der erste Abschnitt (10; 26) aus einem C-basierten Material gebildet ist und dass der zweite Abschnitt (6; 24) aus Mo oder aus einer Mo-basierten Legierung gebildet ist.

11. Verfahren gemäß einem der Ansprüche 1 bis 9, **dadurch gekennzeichnet, dass** der erste Abschnitt aus einer Keramik gebildet ist.

12. Verfahren gemäß einem der vorangehenden Ansprüche, **dadurch gekennzeichnet, dass** sowohl der erste Abschnitt (10; 26) als auch der zweite Abschnitt (6; 24) jeweils Abschnitte von Bauteilen einer Röntgenanode (2; 22) bilden.

13. Hochtemperaturfester Verbundkörper, bei welchem ein erster, nicht-metallischer Abschnitt (10; 26) über eine Lötverbundschicht (12; 28) mit einem zweiten, metallischen Abschnitt (6; 24) aus Mo, einer Mo-basierten Legierung, W oder einer W-basierten Legierung verbunden ist,
wobei der erste Abschnitt (10; 26) über eine erste, aus einem Zr-Lot (32) gebildete Lötverbindung mit einer Zwischenschicht (34), die zumindest in einem Kernbereich zu mindestens 90 at.% aus mindestens einem der Elemente Ta, Nb und/oder W gebildet ist, verbunden ist,
und wobei die Zwischenschicht (34) über eine zweite Lötverbindung (40, 42), die aus einem Ti-Lot, aus einer Ti-V-Lotkombination, aus einem ZrLot oder aus einer Zr-Ti-Lotkombination gebildet ist, mit dem zweiten Abschnitt (6; 24) verbunden ist.

14. Hochtemperaturfester Verbundkörper gemäß dem vorangehenden Anspruch, **dadurch gekennzeichnet, dass** die zweite Lötverbindung (40; 42) aus einem Ti-Lot mit einer Wiederaufschmelztemperatur von maximal 1.860°C gebildet ist.

15. Hochtemperaturfester Verbundkörper gemäß Anspruch 13, **dadurch gekennzeichnet, dass** die zweite Lötverbindung aus einer Ti-V-Lotkombination (40; 42) mit einer Wiederaufschmelztemperatur von maximal 1.780 °C gebildet ist.

## Claims

1. Process for producing a high-temperature-resistant composite body (2; 22) by joining over an area of a first, nonmetallic section (10; 26) via a bonding solder layer (12; 28) to a second, metallic section (6; 24) composed of Mo, an Mo-based alloy, W or a W-based alloy, **characterized by** the following steps:
A) production of a first arrangement of the first section (10; 26), a first Zr solder (32) and an intermediate layer (34) in this order,
where the intermediate layer (34) is formed to an extent of at least 90 atom% by at least one of the elements Ta, Nb and/or W,
B) heating of the first arrangement in a first soldering step in such a way that the Zr solder (32) but not the intermediate layer (34) melts and a part composite body (38) is obtained,
C) production of a second arrangement of the part composite body (38), a second solder (40, 42) adjoining the intermediate layer (34) and the second section (6; 24) in this order,
where the second solder (40, 42) is formed by precisely one material from the group consisting of Ti, Ti-based solder combination, V-based solder combination, Zr or Zr-based solder combination and is selected so that it melts at a lower temperature than the first Zr solder (32) in the second arrangement, and
D) heating of the second arrangement in a second soldering step in such a way that the second solder (40, 42) but not the soldered bond obtained from the first Zr solder (32) melts.

2. Process according to Claim 1, **characterized in that** the maximum furnace temperature reached in the second soldering step is at least 100°C lower than the maximum furnace temperature reached in the first soldering step.

3. Process according to Claim 1 or 2, **characterized in that** a maximum furnace temperature in the range from 1800°C inclusive to 2000°C inclusive is set in the first soldering step and **in that** a maximum furnace temperature in the range from 1550°C inclusive to 1720°C inclusive is set in the second soldering step.

4. Process according to any of the preceding claims, **characterized in that** the material of the second solder is selected in such a way that it has a melting point in the range from 1550°C inclusive to 1680°C inclusive in the second arrangement.

5. Process according to any of the preceding claims, **characterized in that** the second solder (40, 42) is formed by precisely one of the following solders:
- a Ti solder,
- a Ti-V solder combination (40, 42),
- a Zr solder, or
- a Zr-Ti solder combination.

6. Process according to any of the preceding claims, **characterized in that** the second solder is formed by a Ti-V solder combination (40, 42) having a proportion of from 12 atom% inclusive to 50 atom% inclusive of V, with the balance being Ti.

7. Process according to any of the preceding claims, **characterized in that** the surface of the intermediate layer (34) of the part composite body (38) is machined before production of the second arrangement.

8. Process according to any of the preceding claims, **characterized in that** the average thickness of the intermediate layer (34) is in the range from 0.1 mm inclusive to 2 mm inclusive.

9. Process according to any of the preceding claims, **characterized in that** the average thickness of the first solder (32) is in the range from 80 µm inclusive to 500 µm inclusive and **in that** the average thickness of the second solder (40, 42) is in the range from 30 µm inclusive to 400 µm inclusive.

10. Process according to any of the preceding claims, **characterized in that** the first section (10; 26) is formed by a C-based material and **in that** the second section (6; 24) is formed by Mo or an Mo-based alloy.

11. Process according to any of Claims 1 to 9, **characterized in that** the first section is formed by a ceramic.

12. Process according to any of the preceding claims, **characterized in that** both the first section (10; 26) and the second section (6; 24) in each case form sections of components of an X-ray anode (2; 22).

13. High-temperature-resistant composite body in which a first, nonmetallic section (10; 26) is joined via a bonding solder layer (12; 28) to a second, metallic section (6; 24) composed of Mo, an Mo-based alloy, W or a W-based alloy, where the first section (10; 26) is joined via a first soldered bond formed by a Zr solder (32) to an intermediate layer (34) which, at least in a core region, is formed to an extent of at least 90 atom% by at least one of the elements Ta, Nb and/or W, and the intermediate layer (34) is joined via a second soldered bond (40, 42) formed by a Ti solder, a Ti-V solder combination, a Zr solder or a Zr-Ti solder combination to the second section (6; 24).

14. High-temperature-resistant composite body according to the preceding claim, **characterized in that** the second soldered bond (40; 42) is formed by a Ti solder having a remelting temperature of not more than 1860°C.

15. High-temperature-resistant composite body according to Claim 13, **characterized in that** the second soldered bond is formed by a Ti-V solder combination (40; 42) having a remelting temperature of not more than 1780°C.

## Revendications

1. Procédé de fabrication d'un corps composite (2; 22) résistant aux températures élevées par liaison plate d'une première section non-métallique (109 ; 26) par le biais d'une couche composite de brasage (12 ; 28) avec une seconde section métallique (6 ; 24) en Mo, un alliage à base de MO, W ou un alliage à base de W, **caractérisé par** les étapes suivantes:
A) production d'un premier agencement à partir de la première section (10 ; 26), un premier brasage Zr (32) et une couche intermédiaire (34) dans cette séquence,
où la couche intermédiaire (34) consiste au moins à 90% at d'au moins l'un des éléments que sont Ta, Nb et/ou W,
B) portée à température du premier agencement dans une première étape de brasage de telle sorte que le brasage Zr (32) ne fait pas fondre la couche intermédiaire (34) et que l'on conserve un corps composite partiel (38),
C) production d'un second agencement à partir du corps composite partiel (38), d'un second brasage (40, 42) limitrophe de la couche intermédiaire (34) et de la seconde section (6; 24) dans cette séquence, où le second brasage (40, 42) est constitué exactement d'un matériau chois dans le groupe de Ti, combinaison de brasage à base de Ti, composition de brasage à base de V, Zr ou combinaison de brasage à base de Zr et est sélectionné de telle sorte que ledit matériau de fonde pas comme le premier brasage Zr (32) dans le second agencement à une température inférieure et
D) portée à température du second agencement dans une seconde étape de brasage de telle sorte que le second brasage (40, 42) ne fait pas fondre la liaison de brasage obtenue à partir du premier brasage Zr (32).

2. Procédé selon la revendication 1, **caractérisé en ce que** la température du four maximale obtenue lors de la seconde étape de brasage est inférieure d'au moins 100°C par rapport à la température du four maximale obtenue lors de la première étape de brasage.

3. Procédé selon la revendication 1 ou la revendication 2, **caractérisé en ce que** lors de la première étape de brasage on obtient une température du four maximale dans la fourchette comprise entre 1800°C compris et 2000°C compris et **en ce que** lors de la seconde étape de brasage on obtient une température du four maximale dans la fourchette comprise entre 1550°C inclus et 1720°C inclus.

4. Procédé selon l'une des revendications précédentes, **caractérisé en ce que** l'on choisit le matériau du second brasage de telle sorte pour qu'il présente dans le second agencement un point de fusion dans la fourchette comprise entre 1550°C inclus et 1680°C inclus.

5. Procédé selon l'une des revendications précédentes, **caractérisé en ce que** le second brasage (40, 42) est constitué précisément des brasages suivants :
- un brasage Ti,
- une combinaison de brasage Ti-V (40, 42),
- un brasage Zr ou
- une combinaison Zr-Ti.

6. Procédé selon l'une des revendications précédentes, **caractérisé en ce que** le second brasage est constitué d'une combinaison de brasage Ti-V (40, 42) avec une portion de V de 12 %at inclus à 50 %at inclus et la portion résiduelle en Ti.

7. Procédé selon l'une des revendications précédentes, **caractérisé en ce que** la surface de la couche intermédiaire (34) du corps composite partiel (38) subit un usinage mécanique avant la production du second agencement.

8. Procédé selon l'une des revendications précédentes, **caractérisé en ce que** l'épaisseur moyenne de la couche intermédiaire (34) est dans la fourchette comprise entre 0,1 mm inclus et 2 mm inclus.

9. Procédé selon l'une des revendications précédentes, **caractérisé en ce que** l'épaisseur moyenne du premier brasage (32) est dans la fourchette comprise entre 80 µm inclus et 500 µm inclus et **en ce que** l'épaisseur moyenne du second brasage (40, 42) est dans la fourchette comprise entre 30 µm inclus et 400 µm inclus.

10. Procédé selon l'une des revendications précédentes, **caractérisé en ce que** la première section (10; 26) est constituée d'un matériau à base C et que la seconde section (6 ; 24) est constituée de Mo ou bien d'un alliage à base Mo.

11. Procédé selon l'une des revendications 1 à 9, **caractérisé en ce que** la première section est constituée de céramique.

12. Procédé selon l'une des revendications précédentes, **caractérisé en ce que** la première section (10; 26) aussi bien que la seconde section (6; 24) constituent respectivement des sections de composants d'une anode Röntgen (2; 22).

13. Corps composite résistant aux températures élevées, dans lequel une première section, non-métallique (10; 26) est reliée par le biais d'une couche composite de brasage (12; 28) à une seconde section métallique (6; 24) en Mo, un alliage base Mo, W ou un alliage à base W,
où la première section (10; 26) est liée, par le biais d'une première liaison de brasage formée d'un brasage Zr (32), à une couche intermédiaire (34), constituée au moins d'un élément parmi Ta, Nb et/ou W, au moins dans un noyau à hauteur de 90% at, et où la couche intermédiaire (34) est liée à la seconde section (6 ; 24) par la biais de la seconde liaison de brasage (40, 42) qui est constituée d'un brasage Ti, d'une combinaison de brasage Ti-V, d'un brasage Zr ou d'une combinaison de brasage Zr-Ti.

14. Corps composite résistant aux températures élevées selon la revendication précédente, **caractérisé en ce que** la seconde liaison de brasage (40; 42) est constituée d'un brasage Ti avec une température de refonte maximale de 1860°C.

15. Corps composite résistant aux températures élevées selon la revendication 13, **caractérisé en ce que** la seconde liaison de brasage est constituée d'une combinaison de brasage Ti-V (40; 42) avec une température de refonte maximale de 1780°C.
